(19) **Europäisches Patentamt / European Patent Office / Office européen des brevets**

(11) **EP 3 757 157 B1**

(12) **EUROPEAN PATENT SPECIFICATION**

(45) Date of publication and mention
of the grant of the patent:
**18.02.2026 Bulletin 2026/08**

(21) Application number: **20180557.9**

(22) Date of filing: **17.06.2020**

(51) International Patent Classification (IPC):
*C08L 75/08* (2006.01)      *C08K 9/10* (2006.01)
*C09J 7/26* (2018.01)      *C08J 9/32* (2006.01)

(52) Cooperative Patent Classification (CPC):
(C-Sets available)
**C08J 9/32; C08L 75/08; C09J 7/26;**
C08G 2110/0066; C08J 2203/22; C08J 2205/052;
C08J 2207/02; C08J 2300/26; C08J 2375/08;
C08K 9/10; C09J 2203/326; C09J 2301/302;
C09J 2301/41; C09J 2301/412; C09J 2475/006
(Cont.)

(54) **COMPOSITION, FOAM SUBSTRATE, BACKING, ADHESIVE TAPE AND USE OF THE SAME**

ZUSAMMENSETZUNG, SCHAUMSUBSTRAT, TRÄGER, KLEBEBAND UND VERWENDUNG DESSELBEN

COMPOSITION, SUBSTRAT EN MOUSSE, SUPPORT, RUBAN ADHÉSIF ET UTILISATION ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2019 CN 201910577061**

(43) Date of publication of application:
**30.12.2020 Bulletin 2020/53**

(73) Proprietor: **tesa SE**
**22848 Norderstedt (DE)**

(72) Inventors:
• **LI, Xiaofei**
**Suzhou, Jiangsu 7-1101 (CN)**
• **CAO, Min**
**Suzhou, Jiangsu 7-1702 (CN)**

• **WU, Yi**
**Suzhou, Jiangsu 21-2507 (CN)**

(74) Representative: **tesa SE**
**Hugo-Kirchberg-Straße 1**
**22848 Norderstedt (DE)**

(56) References cited:
**EP-A1- 2 860 028**      **CN-A- 109 137 537**
**CN-B- 106 634 504**      **JP-A- 2014 080 513**
**US-A1- 2002 094 403**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(Cont. next page)

(52) Cooperative Patent Classification (CPC): (Cont.)

C-Sets
**C08L 75/08, C08L 79/08**

**Description**

TECHNICAL FIELD

The present invention refers to a composition, in particular foamable composition, comprising at least one aqueous elastomer dispersion and expandable microspheres or expanded microspheres; a closed-cell foam substrate made from said composition; a backing comprising the closed-cell foam substrate; an adhesive tape comprising the backing; as well as the use of such an adhesive tape.

BACKGROUND

Foam substrate is widely used in the field of cushioning, shock absorption and so on. The types of a commercial foam substrate include polyethylene (PE), polypropylene (PP), ethylene-vinyl acetate copolymer (EVA), ethylene-propylene-diene rubber (EPDM), polyurethane (PU) foam, etc. Due to the advantages on processing, PE foam is most widely applied and developed. Ultra-thin PE foams have excellent impact resistance, and thus some ultra-thin PE foams with high-performance have been applied to electronics. However, the impact absorption performance of the current PE foam is limited to an extent, for example tesa® 668 series.

Moreover, the current commercial PU foam is commonly prepared by foaming a solvent-based polyurethane, by foaming via a reaction of chemical reagents, or by foaming through an injection of nitrogen. However, the cohesion of the PU foam cannot reach a very high level, and thus its impact absorption capacity is not high enough to be comparable to PE foam.

Therefore, there is still a need for improvement on existing foam substrates, especially the PU foam substrates, so that they can be adapted to specific applications, for example lens mounting, high shock absorption bonding and bonding a foldable device, etc..

EP 2 860 028 A1 discloses a polymer sheet including a polyurethane core. The polyurethane core has a first major surface and a second major surface opposite the first major surface. The polymer sheet can have at least one functional layer overlying a major surface.

JP 2014 080513 A describes a dry film containing a water-dispersible polyurethane resin and microballoons and having a 100% modulus of 2 to 8 MPa. The dry film is formed from the water-dispersible polyurethane resin.

CN 109137537 A relates to a closed porous composite material, a heat insulation material, a sound insulation material and a manufacturing method thereof.

CN106634504 B discloses a repair agent for leather and a preparation method thereof.

US 2002/094403 A1 describes a laminate with a peelable top layer. The laminate comprises a substrate such as a porous board, the top layer such as a plastic top layer or a decorated metal plate, and a bonding layer between the top layer and the substrate. At least one of the substrate and the top layer is porous.

SUMMARY OF THE INVENTION

It is an object of the invention to provide an improved composition, in particular formula of foamable composition, so that a foam substrate obtained by using it has an at least comparable, or even significantly better, impact resistance than the PE foam which is recognized on the market to have an excellent impact resistance, for example tesa® 668 series. Further, when such a foam substrate is used as a backing or a carrier for adhesive tape, it also shows an improved adhesion to the adhesive layer. Moreover, an adhesive tape with this kind of foam substrate can be advantageously used for lens mounting, shock absorption bonding and bonding of a foldable device due to its excellent performance, especially impact resistance.

The present invention provides a composition comprising at least one aqueous elastomer dispersion and expandable microspheres or expanded microspheres characterized in that the composition comprises a first aqueous polyether based polyurethane dispersion and a second aqueous polyether based polyurethane dispersion, wherein the polyurethane in the first aqueous polyether based polyurethane dispersion has an elongation at break of 550% to 1000%, and the polyurethane in the second aqueous polyether based polyurethane dispersion has a elongation at break of below 500%.

"Polyurethanes" are understood in a broad sense to be polymeric substances in which repeating units are linked to one another by urethane moieties having -NH-CO-O-.

"Microspheres" are understood to mean hollow microbeads that are elastic and hence expandable in their ground state, having a thermoplastic polymer shell. These beads have been filled with low-boiling liquids or liquefied gas. Shell material employed is especially polyacrylonitrile, PVDC, PVC or polyacrylates. Suitable low-boiling liquids are especially hydrocarbons from the lower alkanes, for example isobutane or isopentane, that are enclosed in the polymer shell under pressure as liquefied gas.

Action on the microballoons, especially by the action of heat, results in softening of the outer polymer shell. At the same time, the liquid blowing gas present within the shell is converted to its gaseous state. This causes irreversible extension and three-dimensional expansion of the microballoons. The expansion has ended when the internal and external pressure are balanced. Since the polymeric shell is conserved, what is achieved is thus a closed-cell foam.

According to the present invention, "expandable" microspheres are understood to mean that the microspheres can be unexpanded or partially expanded, and can in both cases be further expanded, i.e. are expandable.

According to the present invention, "expanded" microspheres are understood to mean "totally expanded, i.e. not expandable" microspheres.

A multitude of expandable microballoon types are commercially available, which differ essentially in terms of their size and the starting temperatures that they require for expansion (75 to 220°C). One example of commercially available unexpanded microballoons is the Expancel® DU products (DU = dry unexpanded) from Akzo Nobel. Expandable microballoon products are also available in the form of an aqueous dispersion having a solids/microballoon content of 40% to 45% by weight, and additionally also in the form of polymer-bound microballoons (masterbatches), for example in ethylene-vinyl acetate with a microballoon concentration of 65% by weight.

According to the present invention, it is possible to use so-called expanded microspheres. In this case, expansion already takes place prior to mixing into the composition. Expanded microspheres are commercially available, for example, under the trade name Dualite® or Expancel xxx DE yy (dry expanded) and Expancel xxx WE yy (wet, expanded) from Akzo Nobel. When the expanded microspheres are used in the composition, compared with the case of using unexpanded microspheres, the foamed microspheres can be uniformly dispersed in the aqueous elastomer dispersion at a higher concentration due to the uniform particle size distribution. Furthermore, the foam substrate obtained from such a composition not only has a particularly good impact resistance, but also has a particularly flat surface, and thus the adhesive tape having said foam substrate is particularly suitable for sealing bonding in optical, electronic and/or precision-mechanical equipments.

According to a preferred embodiment of the invention, the composition comprises at least one aqueous elastomer dispersion and expandable microspheres or expanded microspheres, characterized in that the composition comprises a first aqueous polyether based polyurethane dispersion and a second aqueous polyether based polyurethane dispersion. The polyurethane foam substrate obtained from such a composition has an at least comparable, or even significantly better, impact resistance than the PE foam which is recognized on the market to have an excellent impact resistance, for example tesa® 668 series.

The composition according to the present invention comprises at least two aqueous polyether based polyurethane dispersion and at least one expanded microsphere, wherein the polyurethane in the first aqueous polyether based polyurethane dispersion has an elongation at break of 550% to 1000%, preferably 600% to 950%, and more preferably 650% to 750%, and the polyurethane in the second aqueous polyether based polyurethane dispersion has an elongation at break of below 500%, preferably 300% to 480%, and in particular 475%. When simultaneously using the aforementioned two aqueous polyether based polyurethane dispersion, the foam substrate obtained from such a composition, when using in an adhesive tape as the backing or carrier, has a particularly good adhesion to the adhesive layer.

Further preferably, the first aqueous polyether based polyurethane dispersion has a viscosity (25 °C) of 100 mPa.s to 150 mPa.s and a 100% modulus of 0.2 to 3 MPa, particularly of 0.2 to 2 MPa, as well as the second aqueous polyether based polyurethane dispersion has a viscosity (25 °C) of below 30 mPa.s, particularly of below 25 mPa.s and a 100% modulus of 4 to 30 MPa, particularly of 7 to 20 MPa.

It is particularly advantageous to use for example PERMUTEX® EVO RU-92-213 or PERMUTEX® EVO RU-92-299 from Stahl as the first aqueous polyether based polyurethane dispersion, and for example PERMUTEX® EVO EX-RU-92-208 from Stahl as the second aqueous polyether based polyurethane dispersion.

In a particularly advantageous embodiment of the invention, the weight ratio of the first aqueous polyether based polyurethane dispersion to the second aqueous polyether based polyurethane dispersion is 20: 1 to 4: 1.

According to a preferred embodiment of the invention, the content of the expanded microspheres is in the range from 0.5% to 20% by weight, preferably 1% to 10% by weight, and more preferably 5% to 10% by weight, based on the total weight of the aqueous elastomer dispersion. The content of the expandable microspheres is in the range from 0.5% to 4% by weight, preferably 1% to 3% by weight, based on the total weight of the aqueous elastomer dispersion.

According to a further preferred embodiment of the invention, the expanded microspheres have a particle size of 20-80 µm. The expandable microspheres have a particle size of 5-80 µm.

It is particularly advantageous to use for example Expancel WE Series from Akzo Nobel as the expanded microspheres. Moreover, microspheres with F-65E grade from Matsµmoto can also be used.

Furthermore, the composition according to the present invention also comprises at least one crosslinker and additive.

The crosslinker used in the present invention preferably includes modified polycarbodiimide, aliphatic polyisocyanate crosslinkers, and the mixtures thereof, which are particularly suitable for aqueous polyurethane dispersions. It is particularly advantageous to use PERMUTEX® XR-5580 and/or PERMUTEX® XR-5588 from Stahl as the crosslinker of the invention.

The additives used in the present invention comprise dispersant (for example, PERMUTEX® EVO DF-2459 from Stahl), rheological modifier (for example, PERMUTEX® RM-622 from Stahl), thickener (for example, PERMUTEX® RM-4456 from Stahl) and colorant (for example, PERMUTEX® PP-39-611 from Stahl).

Further advantageously, flame retardants can be added to the composition according to the present invention so that the foam substrate made from this composition has flame retardancy. Any flame retardant known in the art that can be used in a foam substrate is usable in the composition according to the present invention.

Furthermore, it is advantageous to use a bio-based aqueous elastomer dispersion in the present invention.

Preferably, when a foam substrate obtained from the composition according to the present invention is used in an adhesive tape, the adhesive tape has a shock strength in x,y-plane of 0.5 to 1.4 J and also a shock strength in z-plane of 0.5 J to 1.2 J, as measured in Dupont test.

In another aspect, the present invention provides a closed-cell, particularly non-adhesive foam substrate, wherein said foam substrate is made from the composition according to the present invention, which comprises at least one aqueous elastomer dispersion and expandable microspheres, or is made by using the composition according to the present invention, which comprises at least one aqueous elastomer dispersion and expanded microspheres.

The foam substrate according to the present invention advantageously has a cell diameter of $20\mu m$ to $150\mu m$ and a density of $500kg/m^3$ to $1200kg/m^3$.

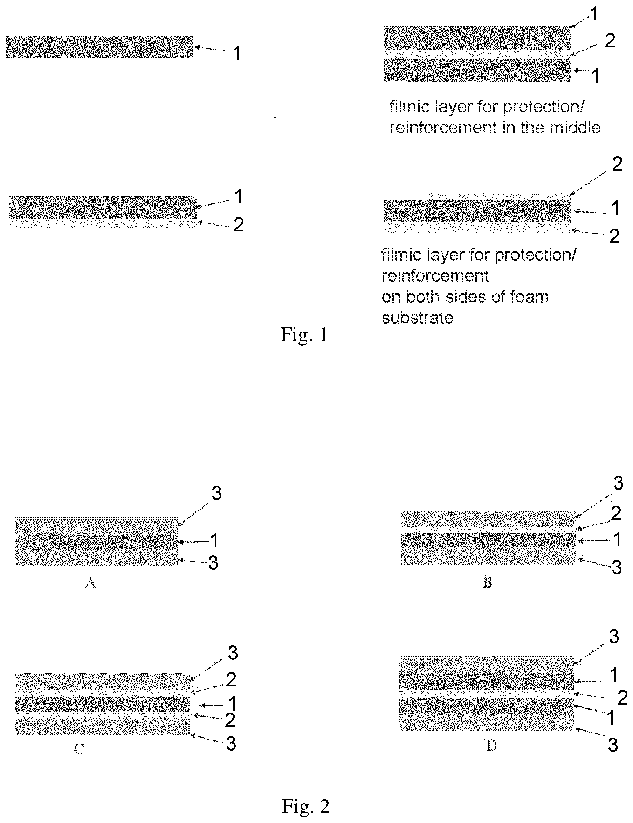

Further, the present invention provides a backing comprising the foam substrate according to the present invention, which further comprises a filmic layer for protection/reinforcement applied on at least one side, preferably on both sides of the foam substrate. Moreover, it is also advantageous that the backing comprises at least two layers of foam substrate according to the present invention, and the film layer for protection/reinforcement is arranged between the two layers of foam substrate as an intermediate layer, as showed in Fig. 1, wherein "1" refers to the foam substrate, and "2" refers to the filmic layer for protection/reinforcement.

The filmic layer for protection/reinforcement used in the present invention can be any type of polymer film, in particular, such as polyolefin (PO), polyethylene terephthalate (PET), thermoplastic polyurethane (TPU) elastomer, etc.

Furthermore, the present invention provides a multilayer structure, in particular an adhesive tape, which comprises the foam substrate according to the present invention or the backing according to the present invention and at least one adhesive layer, preferably at least one pressure-sensitive adhesive layer, further preferably at least one foamed pressure-sensitive adhesive layer.

In the adhesive tape according to the invention, the following designs are advantageous, which sequentially have:

- three-layers structure A: foamed or non-foamed pressure-sensitive adhesive layer/foam substrate of the present invention/foamed or non-foamed pressure-sensitive adhesive layer;

- four-layers structure B: foamed or non-foamed pressure-sensitive adhesive layer/filmic layer for protection or reinforcement/foam substrate according to the present invention/foamed or non-foamed pressure-sensitive adhesive layer;

- five-layers structure C: foamed or non-foamed pressure-sensitive adhesive layer/filmic layer for protection or reinforcement/foam substrate according to the present invention/filmic layer for protection or reinforcement/foamed or non-foamed pressure-sensitive adhesive layer; and

- five-layers structure D: foamed or non-foamed pressure-sensitive adhesive layer/foam substrate according to the present invention/filmic layer for protection or reinforcement/ foam substrate according to the present invention/- foamed or non-foamed pressure-sensitive adhesive layer,

as showed in Fig. 2, wherein "1" refers to the foam substrate according to the present invention, "2" refers to the filmic layer for protection/reinforcement, and "3" refers to the foamed or non-foamed pressure-sensitive adhesive layer.

A particularly preferred embodiment of the invention concerns an adhesive tape of symmetric construction in relation to the composition of the layers, in that the two outer pressure-sensitive adhesive layers are chemically identical, and advantageously also, if additives are added thereto, these are identical and used in an identical amount.

Also achievable in accordance with the invention is an adhesive tape which is of structurally symmetric construction in z direction, but in which the two outer pressure-sensitive adhesive layers are of equal thickness and/or have the same density but are chemically different.

In a very advantageous procedure, the adhesive tape is of entirely symmetric construction, i.e. the two outer pressure-sensitive adhesive layers and the internal foam substrates are correspondingly identical with regard to the chemical composition thereof, and have the same thickness and density with regard to the structural composition thereof.

"Entirely symmetric" relates especially to the z direction ("thickness", direction perpendicular to the plane of the pressure-sensitive adhesive strip) of the pressure-sensitive adhesive strip, but may of course additionally also relate to the geometry in the surface plane (x and y directions, i.e. length and width, of the pressure-sensitive adhesive strip).

According to the invention, an adhesive tape is considered to be a flat structure, i.e. a structure that is substantially extended in two dimensions. Tapes with extended length and limited width, tape sections, labels, blanks are therefore included in the term "adhesive tape". However, the release liner lying on the pressure-sensitive adhesive layer-if present-is not considered to be a component of the adhesive tape, as it is provided only for temporary protection of the pressure-sensitive adhesive and for the removal thereof before application of the adhesive tape.

Advantageously, the pressure-sensitive adhesive used in the adhesive tape according to the present invention comprises a polyacrylate polymer. This is a polymer obtainable by free-radical polymerization of acrylic monomers, which are also understood to mean methacrylic monomers, and optionally further copolymerizable monomers.

According to the invention, it may be a polyacrylate crosslinkable with epoxy groups. Accordingly, monomers or comonomers used may preferably be functional monomers crosslinkable with epoxy groups; monomers employed here especially include monomers having acid groups (particularly carboxylic acid, sulfonic acid or phosphoric acid groups) and/or hydroxyl groups and/or acid anhydride groups and/or epoxy groups and/or amine groups; preference is given to monomers containing carboxylic acid groups. It is especially advantageous when the polyacrylate includes polymerized acrylic acid and/or methacrylic acid.

Further monomers which can be used as comonomers for the polyacrylate are, for example, acrylic and/or methacrylic esters having up to 30 carbon atoms, vinyl esters of carboxylic acids having up to 20 carbon atoms, vinylaromatics having up to 20 carbon atoms, ethylenically unsaturated nitriles, vinyl halides, vinyl ethers of alcohols containing 1 to 10 carbon atoms, aliphatic hydrocarbons having 2 to 8 carbon atoms and 1 or 2 double bonds, or mixtures of these monomers.

Preference is given to using a polyacrylate which can be derived from the following monomer composition:

i) acrylic esters and/or methacrylic esters of the following formula

$$CH_2=C(R^1)(COOR^2)$$

where $R^1$ = H or $CH_3$ and $R^2$ = H or linear, branched or cyclic, saturated or unsaturated alkyl radicals having 1 to 30 and especially having 4 to 18 carbon atoms,
ii) olefinically unsaturated monomers having functional groups of the type already defined for reactivity with epoxy groups,
iii) optionally further acrylates and/or methacrylates and/or olefinically unsaturated monomers copolymerizable with component (i).

The monomers of component (i) are especially plasticizing and/or nonpolar monomers. Preference is given to using, for the monomers (i), acrylic monomers comprising acrylic and methacrylic esters having alkyl groups consisting of 4 to 18 carbon atoms, preferably 4 to 9 carbon atoms. Examples of such monomers are n-butyl acrylate, n-butyl methacrylate, n-pentyl acrylate, n-pentyl methacrylate, n-amyl acrylate, n-hexyl acrylate, hexyl methacrylate, n-heptyl acrylate, n-octyl acrylate, n-octyl methacrylate, n-nonyl acrylate, isobutyl acrylate, isooctyl acrylate, isooctyl methacrylate and the branched isomers thereof, for example 2-ethylhexyl acrylate or 2-ethylhexyl methacrylate.

Preference is given to using, for component (ii), monomers having those functional groups selected from the following enumeration:
hydroxyl, carboxyl, sulfo or phosphonic acid groups, acid anhydrides, epoxides, amines.

Particularly preferred examples of monomers of component (ii) are acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate.

Monomers mentioned by way of example for component (iii) are: methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, t-butylphenyl acrylate, t-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclohexyl acrylate, 3,5-dimethyladamantyl acrylate, 4-cumylphenyl methacrylate, cyanoethyl acrylate, cyanoethyl methacrylate, 4-biphenyl acrylate, 4-biphenyl methacrylate, 2-naphthyl acrylate, 2-naphthyl methacrylate, tetrahydrofufuryl acrylate, diethylaminoethyl acrylate, diethylaminoethyl methacrylate, dimethylaminoethyl acrylate, dimethylaminoethyl methacrylate, 2-butoxyethyl acrylate, 2-butoxyethyl methacrylate, methyl 3-methoxyacrylate, 3-methoxybutyl acrylate, phenoxyethyl acrylate, phenoxyethyl methacrylate, 2-phenoxyethyl methacrylate, butyldiglycol methacrylate, ethylene glycol acrylate, ethylene glycol monomethyl acrylate, methoxy polyethylene glycol methacrylate 350, methoxy polyethylene glycol methacrylate 500, propylene glycol monomethacrylate, butoxy diethylene glycol methacrylate, ethoxy triethyleneglycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropylacrylamide, dimethylaminopropylmethacrylamide, N-(1-methylundecyl)acrylamide, N-(n-butoxymethyl)acrylamide, N-(butoxymethyl)methacrylamide, N-(ethoxymethyl)acrylamide, N-(n-octadecyl)acrylamide, and also N,N-dialkyl-substituted amides, for example N,N-dimethylacrylamide, N,N-dimethylmethacrylamide, N-benzylacrylamides, N-isopropylacrylamide, N-tert-butylacrylamide, N-tert-octylacrylamide, N-methylolacrylamide, N-methylolmethacrylamide, acrylonitrile, methacrylonitrile, vinyl ethers such as vinyl methyl ether, ethyl vinyl ether, vinyl isobutyl ether, vinyl esters such as vinyl acetate, vinyl chloride, vinyl halides, vinylidene chloride, vinylidene halides, vinylpyridine, 4-vinylpyridine, N-vinylphthalimide, N-vinyllactam, N-vinylpyrrolidone, styrene, $\alpha$- and p-methylstyrene, $\alpha$-butylstyrene, 4-n-butylstyrene, 4-n-decylstyrene, 3,4-dimethoxystyrene, macromonomers such as 2-polystyrene-ethyl methacrylate (molecular weight $M_w$ from 4000 to 13 000 g/mol), poly(methyl methacrylate)-ethyl methacrylate ($M_w$ from 2000 to 8000 g/mol).

Monomers of component (iii) may advantageously also be chosen such that they contain functional groups that assist subsequent radiation-chemical crosslinking (for example by electron beams, UV). Suitable copolymerizable photoinitiators are, for example, benzoin acrylate and acrylate-functionalized benzophenone derivatives. Monomers that assist crosslinking by electron bombardment are, for example tetrahydrofurfuryl acrylate, N-tert-butylacrylamide, allyl acrylate, but this enumeration is not conclusive.

It is further advantageous that the surface of the foam substrate according to the present invention is subjected to, for example, corona or plasma treatment in order to further improve the adhesion of the foam substrate to other layers, in particular the pressure-sensitive adhesive layer.

The adhesive tape according to the present invention is notable due to its excellent application characteristics that meet the requirements in the object of the present invention. It has been found here that the shock absorption capacity thereof is particularly superior to the products in the prior art, especially tesa® 668 series.

In particular, the adhesive tape according to the present invention has a shock strength in x,y-plane of 0.5 to 1.4 J and also a shock strength in z-plane of 0.5 J to 1.2 J, as measured in Dupont test.

Therefore, the adhesive tape according to the present invention can be particularly used in, for example, lens mounting, shock absorption bonding and bonding in a foldable device.

BRIEF DESCRIPTION OF DRAWINGS

FIG. 1 shows an embodiment of a preferred foam substrate having a multilayer structure according to the present invention.

FIG. 2 shows an embodiment of a preferred adhesive tape having a multilayer structure according to the present invention.

FIG. 3 shows the film formation after foaming the composition in Example 9.

FIG. 4 shows the size distribution of the microsphere in Example 9.

FIG. 5 shows the size distribution of the microsphere in Example 8.

FIG. 6 shows the comparison of the Dupont test results between the commercial PU foam adhesive tape (Ranju standard series HF-48 S015) and the PE foam adhesive tape (tesa® 66825), which is used as a benchmark.

FIG. 7 shows the comparison of the Dupont test results between Examples 1 to 6 according to the present invention and the PE foam adhesive tape (tesa® 66824), which is used as a benchmark.

FIG. 8 shows the comparison of the Dupont test results between Examples 7 to 8 according to the present invention and the PE foam adhesive tape (tesa® 66824), which is used as a benchmark.

FIG. 9 shows the comparison of the Dupont test results between a polyurethane foam adhesive tape prepared by using an aqueous polyester based polyurethane dispersion and the PE foam adhesive tape (tesa® 66824), which is used as a benchmark.

FIG. 10 shows the comparison of the Dupont test results between a polyurethane foam adhesive tape prepared by using an aqueous polyether based polyurethane dispersion and the PE foam adhesive tape (tesa® 66824), which is used as a benchmark.

DETAILED DESCRIPTION

The invention is elucidated in detail hereinafter by examples.

Table 1: the commercially available chemicals used in the examples

| Component | Trade name | Manufacturer |
|---|---|---|
| Aqueous polyurethane dispersion (emulsion) | PERMUTEX® EVO RU-92-299 (polyether based, Elongation at break: 950%, 100% | Stahl |
| | Modulus: 2MPa, Viscosity (25°C): 100mPa.s) | |
| | PERMUTEX® EVO EX-RU-92-208 (polyether based, Elongation at break: 475%, 100% Modulus: 7MPa, Viscosity (25°C): 25mPa.s) | Stahl |
| | PERMUTEX® EVO RU-92-213 (polyether based, Elongation at break:650%, 100% Modulus: 2MPa, Viscosity (25°C):150mPa.s) | Stahl |
| | PERMUTEX® EX-RU-43-193 (polyester based) | Stahl |
| Solvent free polyurethane (reactive aliphatic polyurethane prepolymer) | PERMAUQRE® HS-13-030 | Stahl |
| Microsphere blowing agent | Expancel®461 WE20d36 (particle size: 20~30$\mu$m; expanded) | AkzoNobel |
| | Expancel®920DU40 (particle size: 10~16$\mu$m; expandable; $T_{start}$=123~133°C) | AkzoNobel |
| | Expancel®951 DU120 (particle size: 28~38$\mu$m; expandable; $T_{start}$=133~143°C) | AkzoNobel |
| | Expancel®053DU40 (particle size: 10~16$\mu$m; expandable; $T_{start}$=96~103°C) | AkzoNobel |
| | FN-100SS (particle size: 6~10$\mu$m; expandable; $T_{start}$=120~130°C) | Matsumoto |
| | F-65E (particle size: 40 ~ 60$\mu$m; expanded) | Matsumoto |
| Crosslinker | PERMUTEX® XR-5580 | Stahl |
| | PERMUTEX® XR-5588 | Stahl |
| Dispersant | PERMUTEX® EVO DF-2459 | Stahl |
| Thickener | PERMUTEX® RM-622 | Stahl |
| colorant | PERMUTEX®PP-39-611 | Stahl |

Example 1: Preparation of the aqueous polyurethane foam and adhesive tape

190 g RU-92-299 and 10 g EX-RU-92-208 were mixed, 5 g Expancel 461WE20d36 microspheres were added into the emulsion system, and then 0.1 g EVO DF-2459 dispersant was added and stirred with a stirrer. After 10 minutes, 6 g XR-5580 and 6 g XR-5588 were added and then stirred for 10 minutes. Subsequently, 0.95g PP-39-611 colorant and 1.9g RM-622 thickener were added, and stirred for 5 minutes until the system became uniform, gray, and viscous. The stirring was then stopped and the coating was prepared.

In a laboratory, two ovens were prepared, one of which was adjusted to 70 °C and the other one was adjusted to 105 °C. The above emulsion was coated onto a release film on a coater in order to obtain a wet film. The wet film was placed in the oven at 70 °C for 2 minutes in order to evaporate water. It was then moved into the oven at 105 °C for 2 minutes for crosslinking and curing.

The obtained foam with a thickness of 100 $\mu$m was subjected to corona treatment, and then 50 gsm (g/m$^2$) acrylic transfer adhesive was laminated on both sides of the foam in order to obtain a foam double-sided adhesive tape which has a total thickness of 200 $\mu$m. After wetting for 1 week, Dupont test was performed (see the test method below).

Examples 2-6: Preparation of the aqueous polyurethane foam and adhesive tape

The aqueous polyurethane foams and the adhesive tapes comprising the same in Examples 2-6 were prepared in the same manner as in Example 1, except that different types and contents of microspheres as shown in Table 2 were used.

Example 7: Preparation of the aqueous polyurethane foam and adhesive tape

170 g RU-92-213 and 30 g EX-RU-92-208 were mixed, 10 g Expancel 461WE20d36 microspheres were added into the emulsion system, and then 0.1 g EVO DF-2459 dispersant was added and stirred with a stirrer. After 10 minutes, 6 g XR-5580 were added and then stirred for 10 minutes. Subsequently, 2g RM-4456 thickener was added, and stirred for 5 minutes until the system became uniform, gray, and viscous. The stirring was then stopped and the coating was prepared.

In a laboratory, two ovens were prepared, one of which was adjusted to 70 °C and the other one was adjusted to 105 °C. The above emulsion was coated onto a release film on a coater in order to obtain a wet film. The wet film was placed in the oven at 70 °C for 2 minutes in order to evaporate water. It was then moved into the oven at 105 °C for 2 minutes for crosslinking and curing.

The obtained foam with a thickness of 100 $\mu$m was subjected to corona treatment, and then 50 gsm (g/m$^2$) acrylic transfer adhesive was laminated on both sides of the foam in order to obtain a foam double-sided adhesive tape which has a total thickness of 200 $\mu$m. After wetting for 1 week, Dupont test was performed.

Example 8: Preparation of the aqueous polyurethane foam and adhesive tape

The aqueous polyurethane foam and the adhesive tape comprising the same in Example 8 were prepared in the same manner as in Example 7, except that the content of the microspheres is 10% by weight, based on the total weight of the aqueous polyurethane dispersion.

Example 9: Preparation of the aqueous polyurethane foam at high content of the expandable microspheres

The aqueous polyurethane foam in Example 9 was prepared in the same manner as in Example 1, except that the microspheres used were expandable Expancel®053DU40 which was added into the aqueous polyurethane dispersion at a content of 4% by weight, based on the total weight of the aqueous polyurethane dispersion.

Example 10: Preparation of the aqueous polyurethane foam by using an aqueous polyester based polyurethane dispersion

1 g Expancel®053DU40 microspheres were added into 145.5 g PERMUTEX®EX-RU-43-193 emulsion system, and stirred with a stirrer. After 10 minutes, 4.5 g XR-5580 was added and then stirred for 10 minutes. Subsequently, 1g PERMUTEX®RM-622 thickener was added, and stirred for 5 minutes until the system became uniform and viscous. The stirring was then stopped and the coating was prepared.

In a laboratory, two ovens were prepared, one of which was adjusted to 70 °C and the other one was adjusted to 105 °C. The thickened emulsion was coated onto a release film on a coater in order to obtain a wet film. The wet film was placed in the oven at 70 °C for 2 minutes in order to evaporate water. It was then moved into the oven at 105 °C for 2 minutes for crosslinking and curing.

The obtained foam with a thickness of 100 $\mu$m was subjected to corona treatment, and then 50 gsm (g/m$^2$) acrylic transfer adhesive was laminated on both sides of the foam in order to obtain a foam double-sided adhesive tape which has a total thickness of 200 $\mu$m. After wetting for 1 week, Dupont test was performed.

Example 11: Preparation of the aqueous polyurethane foam by using only one aqueous polyether based polyurethane dispersion

0.9 g Expancel®053DU40 microspheres were added into 151.34 g RU-92-299 emulsion system, and stirred with a stirrer. After 10 minutes, 4.5 g XR-5580 was added and then stirred for 10 minutes. Subsequently, 2g RM-622 thickener was added, and stirred for 5 minutes until the system became uniform, gray, and viscous. The stirring was then stopped and the coating was prepared.

In a laboratory, two ovens were prepared, one of which was adjusted to 70 °C and the other of which was adjusted to 105 °C. The thickened emulsion was coated onto a release film on a coater in order to obtain a wet film. The wet film was placed in the oven at 70 °C for 2 minutes in order to evaporate water. It was then moved into the oven at 105 °C for 2 minutes for crosslinking and curing.

The obtained foam with a thickness of 100 $\mu$m was subjected to corona treatment, and then 50 gsm (g/m$^2$) acrylic transfer adhesive was laminated on both sides of the foam in order to obtain a foam double-sided adhesive tape which has a total thickness of 200 $\mu$m. After wetting for 1 week, Dupont test was performed.

The types of microspheres used in above examples and their weight percentage contents based on the total weight of the aqueous polyurethane dispersion are shown in Table 2 below.

Table 2: the types and contents (based on the total weight of the aqueous polyurethane dispersion) of the microspheres used in each of the examples and comparative examples

| Example | Microspheres | Content (wt%) |
|---|---|---|
| Example 1 | 461 WE20d36 | 3 |
| Example 2 | 461 WE20d36 | <1 |
| Example 3 | 461 WE20d36 | 1 |
| Example 4 | FN-100SS | 3 |
| Example 5 | F-65E | 3 |
| Example 6 | 461WE20d36 | 10 |
| Example 7 | 461WE20d36 | 5 |
| Example 8 | 461WE20d36 | 10 |
| Example 9 | 053DU40 | 4 |
| Example 10 | 053DU40 | 0.7 |
| Example 11 | 053DU40 | 0.6 |

Comparison of Dupont test results

**I.** Comparison between Ranju standard series HF-48 S015 polyurethane foam adhesive tape and benchmark

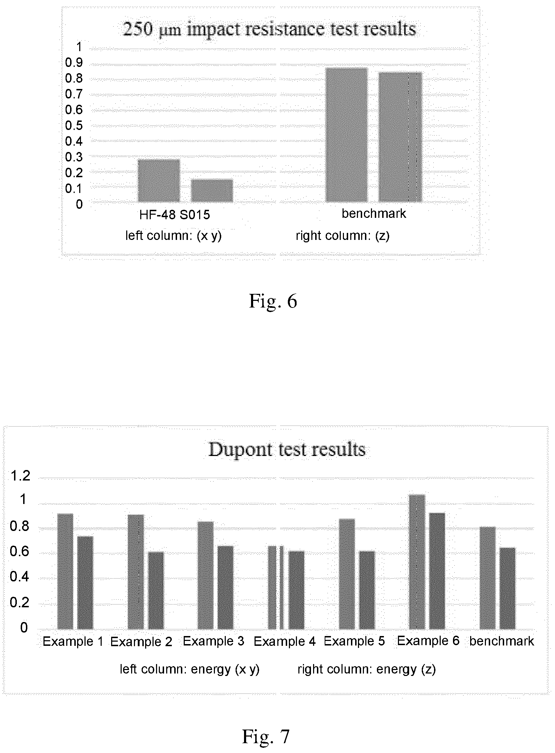

As the benchmark, a sample (total thickness: 250 $\mu$m, the thickness of PE foam substrate: 150 $\mu$m, 50 gsm acrylic transfer adhesive on both sides) of a PE foam adhesive tape (tesa®66825) is used, which is currently recognized to have the best impact resistance among the commercial products. The Dupont test results of the common commercial polyurethane foam for impact absorption (Ranju standard series HF-48 S015, 150$\mu$m polyurethane foam substrate, http://www.unipoly.com.cn/plus/list.php?tid=92) are compared with those of the benchmark. It can be seen from FIG. 6 that the common commercial polyurethane foam adhesive tape for impact absorption is far poorer than the PE foam adhesive tape in terms of impact resistance.

**II.** In the case of using a sample (total thickness: 200 $\mu$m, the thickness of PE foam substrate: 100 $\mu$m, 50 gsm acrylic transfer adhesive on both sides) of a PE foam adhesive tape (tesa®66824), which is currently recognized to have the best impact resistance among the commercial products, as benchmark, the Dupont test results of the adhesive tapes in the Examples according to the present invention are respectively compared with those of the benchmark as follows:

Comparison between Examples 1-6 according to the present invention and the benchmark

It can be seen from FIG. 7 that the foam adhesive tapes in Examples 1-6 according to the present invention have an impact resistance comparable to the PE foam adhesive tape which is used as the benchmark, wherein Example 6, which uses the combination of the first aqueous polyether based polyurethane dispersion (with polyurethane having an elongation at break of 950%), the second aqueous polyether based polyurethane dispersion (with polyurethane having an elongation at break of 475%) and expanded microspheres, even shows significantly better impact resistance than the benchmark.

Comparison between Examples 7 to 8 according to the present invention and the benchmark

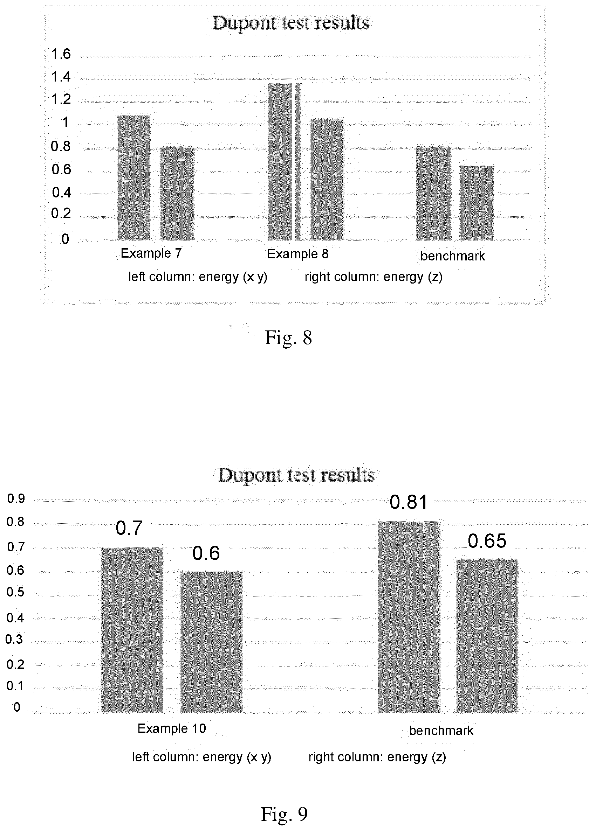

Surprisingly, the inventors have found that when the aqueous polyether based polyurethane dispersion with a polyurethane having an elongation at break of 650%, the above second aqueous polyether based polyurethane dispersion and the expanded microspheres are used in the composition according to the present invention (Examples 7 and 8), a PU foam adhesive tape having significantly better impact resistance than the benchmark (PE foam adhesive tape) is obtained, and also at the same content of expanded microspheres, Example 8 shows better impact resistance than Example 6 which uses the above first aqueous polyether based polyurethane dispersion with a polyurethane having an elongation at break of 950% (see Fig. 8).

Comparison between expanded microspheres and unexpanded microspheres (i.e. expandable microspheres)

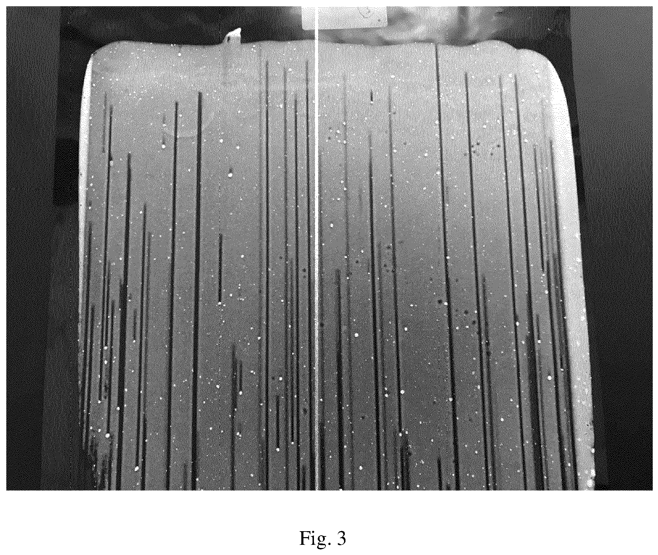

In Example 9, 4% by weight of unexpanded microspheres 053DU40 are added into the aqueous polyurethane dispersion. However, it is found that since the unexpanded microspheres 053DU40 cannot be well dispersed in the polyurethane dispersion, agglomeration is liable to occur, when the microspheres are added at an amount of greater than 3% by weight. This phenomenon seriously affects the uniform distribution of the microspheres and the subsequent film formation of the foam substrate during the preparation of ultra-thin foam (see Fig. 3).

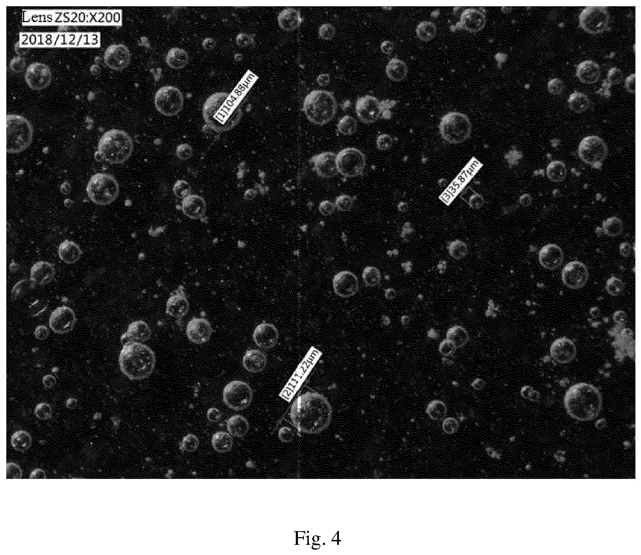

Furthermore, when the unexpanded microspheres are added into the system, the foaming takes place to various extents during the heating process, so that expanded microspheres with uneven sizes would be obtained. It can be seen from Fig. 4 that the range of the microsphere size distribution is large, and thus the uniformity is poor.

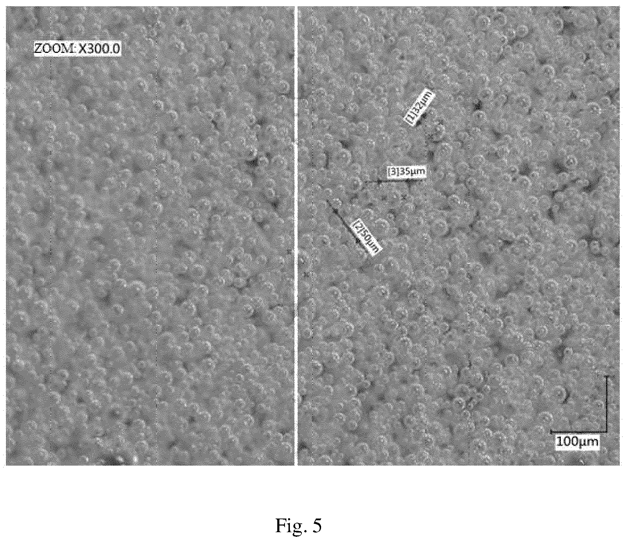

In contrast, when the foamed microspheres are used to prepare the foam substrates, the microspheres can be uniformly dispersed in the aqueous polyurethane dispersion at a higher content (Examples 6-8), and the microspheres have a uniform size distribution and it is easy to form a film during the preparation of the foam substrate by using the microspheres (see Fig. 5).

In addition, even if the polyurethane foam adhesive tape is prepared by using unexpanded microspheres at a lower content (Example 4), such an adhesive tape cannot achieve the same impact resistance as in the case of using the foamed microspheres at the same content (Example 1).

Comparison between the polyurethane foam adhesive tape prepared by using an aqueous polyester based polyurethane dispersion and the benchmark

It can be seen from Fig. 9 that when using an aqueous polyester based polyurethane dispersion, the polyurethane foam adhesive tape made from it has a poor adhesion performance. This results in relatively lower values in the Dupont test. Moreover, the hydrolysis resistance of this kind dispersion is not as good as that of the composition with a polyether based dispersion which is resistant to hydrolysis, high temperature and high humidity.

Comparison between the polyurethane foam adhesive tape prepared by using only one aqueous polyether based polyurethane dispersion and the benchmark

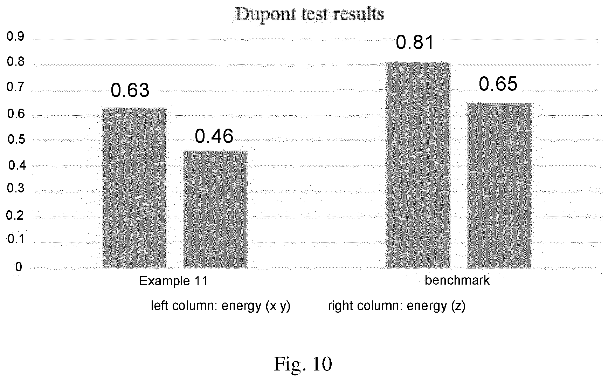

It can be seen from Fig. 10 that when using only one aqueous polyether based polyurethane dispersion to prepare the foam adhesive tape, the impact resistance of the tape is lower than that of the benchmark (PE foam). This is because the foam substrate made from it has a poor adhesion to the adhesive layer, and thus when the Dupont test is performed, degumming is liable to occur, resulting in a lower impact resistance value.

Test Method

Dupont Test

*Impact resistance; z direction*

A square sample in the shape of a frame was cut out of the adhesive tape to be examined (external dimensions 33 mm x 33 mm; border width 2.0 mm; internal dimensions (window cut-out) 29 mm x 29 mm). This sample was stuck to a PC frame (external dimensions 45 mm x 45 mm; border width 10 mm; internal dimensions (window cut-out) 25 mm x 25 mm;

thickness 3 mm). A PC window of 35 mm x 35 mm was stuck to the other side of the double-sided adhesive tape. The bonding of PC frame, adhesive tape frame and PC window was effected such that the geometric centers and the diagonals were each superimposed on one another (corner-to-corner). The bonding area was 248 mm². The bond was subjected to a pressure of 248 N for 5 s and stored under conditions of 23°C/50% relative humidity for 24 hours.

Immediately after the storage, the adhesive composite composed of PC frame, adhesive tape and PC window was braced by the protruding edges of the PC frame in a sample holder such that the composite was aligned horizontally and the PC window was beneath the frame. The sample holder was then inserted centrally the intended receptacle of the "DuPont Impact Tester". The impact head of weight 150 g was used in such a way that the circular impact geometry with a diameter of 20 mm impacted centrally and flush on the window side of the PC window.

A weight having a mass of 150 g guided on two guide rods was allowed to drop vertically from a height of 5 cm onto the composite composed of sample holder, sample and impact head thus arranged (test conditions: 23°C, 50% relative humidity). The height from which the weight dropped was increased in 5 cm steps until the impact energy introduced destroyed the sample as a result of the impact stress and the PC window parted from the PC frame.

In order to be able to compare experiments with different samples, the energy was calculated as follows:

$$E\ [J] = \text{height [m]*mass of weight [kg]*}9.81\ \text{m/s}^2$$

Five samples per product were tested, and the mean energy was reported as index for impact resistance.

*lateral impact resistance; x, y direction*

A square sample in the shape of a frame was cut out of the adhesive tape to be examined (external dimensions 33 mm x 33 mm; border width 2.0 mm; internal dimensions (window cut-out) 29 mm x 29 mm). This sample was stuck to a PC frame (external dimensions 45 mm x 45 mm; border width 10 mm; internal dimensions (window cut-out) 25 mm x 25 mm; thickness 3 mm). A PC window of 35 mm x 35 mm was stuck to the other side of the double-sided adhesive tape. The bonding of PC frame, adhesive tape frame and PC window was effected such that the geometric centers and the diagonals were each superimposed on one another (corner-to-corner). The bonding area was 248 mm². The bond was subjected to a pressure of 248 N for 5 s and stored under conditions of 23°C/50% relative humidity for 24 hours.

Immediately after the storage, the adhesive composite composed of PC frame, adhesive tape and PC window was braced by the protruding edges of the PC frame in a sample holder such that the composite was aligned vertically. The sample holder was then inserted centrally the intended receptacle of the "DuPont Impact Tester". The impact head, weighing 150 g, was inserted such that the rectangular impact geometry with the dimensions of 20 mm x 3 mm impacted centrally and flushly on the upwardly directed end-face side of the PC window.

A weight having a mass of 150 g guided on two guide rods was allowed to drop vertically from a height of 5 cm onto the composite composed of sample holder, sample and impact head thus arranged (test conditions: 23°C, 50% relative humidity). The height from which the weight dropped was increased in 5 cm steps until the impact energy introduced destroyed the sample as a result of the cross impact stress and the PC window parted from the PC frame.

In order to be able to compare experiments with different samples, the energy was calculated as follows:

$$E\ [J] = \text{height [m]*mass of weight [kg]*}9.81\ \text{m/s}^2$$

Five samples per product were tested, and the mean energy was reported as index for lateral impact resistance.

It should be understood that embodiments described herein should be considered in a descriptive sense only and not for purposes of limitation. Descriptions of features or aspects within each embodiment should be considered as available for other similar features or aspects in other embodiments.

**Claims**

1. A composition comprising at least one aqueous elastomer dispersion and expandable microspheres or expanded microspheres, **characterized in that** the composition comprises a first aqueous polyether based polyurethane dispersion and a second aqueous polyether based polyurethane dispersion, wherein the polyurethane in the first aqueous polyether based polyurethane dispersion has an elongation at break of 550% to 1000%, and the polyurethane in the second aqueous polyether based polyurethane dispersion has a elongation at break of below 500%.

2. The composition as claimed in claim 1, wherein the polyurethane in the first aqueous polyether based polyurethane dispersion has an elongation at break of 600% to 750%.

3. The composition as claimed in any one of claims 1 or 2, wherein when a foam substrate obtained from the composition is used in an adhesive tape, the adhesive tape has a shock strength in x,y-plane of 0.5 J to 1.4 J and also a shock strength in z-plane of 0.5 J to 1.2 J, as measured in Dupont test.

4. Foam substrate obtained by using the composition as claimed in any one of claims 1 to 3, wherein the foam substrate is a closed-cell foam substrate

5. Backing comprising the foam substrate as claimed in claim 4 and a filmic layer for protection/reinforcement applied on at least one side of the foam substrate.

6. Adhesive tape comprising the foam substrate as claimed in claim 4 or the backing as claimed in claim 5 and at least one layer of adhesive, preferably pressure sensitive adhesive.

7. Use of the adhesive tape as claimed in claim 6 in lens mounting, shock absorption bonding or bonding a foldable device.

**Patentansprüche**

1. Zusammensetzung umfassend mindestens eine wässrige Elastomerdispersion und ausdehnbare Mikrosphären oder ausgedehnte Mikrosphären, **dadurch gekennzeichnet, dass** die Zusammensetzung eine erste wässrige Polyurethandispersion auf Polyetherbasis und eine zweite wässrige Polyurethandispersion auf Polyetherbasis umfasst, wobei das Polyurethan in der ersten wässrigen Polyurethandispersion auf Polyetherbasis eine Bruchdehnung von 550 % bis 1000 % aufweist und das Polyurethan in der zweiten wässrigen Polyurethandispersion auf Polyetherbasis eine Bruchdehnung von unter 500 % aufweist.

2. Zusammensetzung nach Anspruch 1, wobei das Polyurethan in der ersten wässrigen Polyurethandispersion auf Polyetherbasis eine Bruchdehnung von 600 % bis 750 % aufweist.

3. Zusammensetzung nach einem der Ansprüche 1 oder 2, wobei, wenn ein Schaumstoffsubstrat, das aus der Zusammensetzung erhalten wird, in einem Klebeband verwendet wird, das Klebeband eine Stoßfestigkeit auf der x,y-Ebene von 0,5 J bis 1,4 J aufweist und auch eine Stoßfestigkeit in der z-Ebene von 0,5 J bis 1,2 J, wie im Dupont-Test gemessen, aufweist

4. Schaumstoffsubstrat, das durch Verwenden der Zusammensetzung nach einem der Ansprüche 1 bis 3 erhalten wird, wobei das Schaumstoffsubstrat ein geschlossenzelliges Schaumstoffsubstrat ist.

5. Trägerschicht umfassend das Schaumstoffsubstrat nach Anspruch 4 und eine filmische Schicht zum Schutz/der Verstärkung, der/die auf mindestens eine Seite des Schaumstoffsubstrats aufgebracht ist.

6. Klebeband umfassend das Schaumstoffsubstrat nach Anspruch 4 oder die Trägerschicht nach Anspruch 5 und mindestens eine Schicht Klebstoff, bevorzugt Haftkleber.

7. Verwendung des Klebebands nach Anspruch 6 in einer Objektivhalterung, Stoßdämpfungsverklebung oder Verklebung einer faltbaren Vorrichtung.

**Revendications**

1. Composition comprenant au moins une dispersion d'élastomère aqueux et des microsphères expansibles ou des microsphères expansées, **caractérisée en ce que** la composition comprend une première dispersion de polyuréthane à base de polyéther aqueux et une seconde dispersion de polyuréthane à base de polyéther aqueux, le polyuréthane dans la première dispersion de polyuréthane à base de polyéther aqueux ayant une élongation à la rupture de 550 % à 1 000 %,, et le polyuréthane dans la seconde dispersion de polyuréthane à base de polyéther aqueux ayant une élongation à la rupture au-dessous de 500 %.

**2.** Composition selon la revendication 1, dans laquelle le polyuréthane dans la première dispersion de polyuréthane à base de polyéther aqueux a une élongation à la rupture de 600 % à 750 %.

**3.** Composition selon l'une quelconque des revendications 1 ou 2, dans laquelle un substrat en mousse obtenu à partir de la composition est utilisé dans un ruban adhésif, le ruban adhésif a une résistance au choc dans le plan x-y de 0,5 J à 1,4 J et aussi une résistance au choc dans le plan z de 0,5 J à 1,2 J, comme mesuré dans le test de Dupont.

**4.** Substrat en mousse obtenu à partir de la composition selon l'une quelconque des revendications 1 à 3, dans lequel l substrat en mousse est un substrat en mousse à cellule fermée.

**5.** Support comprenant le substrat en mousse selon la revendication 4 et couche filmique pour protection/renforcement appliquée sur au moins un côté du substrat en mousse.

**6.** Ruban adhésif comprenant le substrat en mousse selon la revendication 4 ou le support selon la revendication 5 et au moins une couche d'adhésif, de préférence un adhésif sensible à la pression.

**7.** Utilisation du ruban adhésif selon la revendication 6 dans le montage de lentille, la liaison d'absorption de choc ou la liaison d'un dispositif repliable.

filmic layer for protection/
reinforcement in the middle

filmic layer for protection/
reinforcement
on both sides of foam
substrate

Fig. 1

A

B

C

D

Fig. 2

Fig. 3

Fig. 4

Fig. 5

Fig. 6

Fig. 7

**Dupont test results**

left column: energy (x y)    right column: energy (z)

Fig. 8

**Dupont test results**

left column: energy (x y)    right column: energy (z)

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2860028 A1
- JP 2014080513 A
- CN 109137537 A
- CN 106634504 B
- US 2002094403 A1